**Europäisches Patentamt**

**European Patent Office**

**Office européen des brevets**

(19)

(11) Veröffentlichungsnummer : **0 037 519**
**B1**

(12) **EUROPÄISCHE PATENTSCHRIFT**

(45) Veröffentlichungstag der Patentschrift :
08.02.84

(21) Anmeldenummer : **81102247.4**

(22) Anmeldetag : **25.03.81**

(51) Int. Cl.³ : **H 04 B 7/26**, H 04 J 3/06

(54) **Mobiles Funknetz mit netzweiter Synchronisation.**

(30) Priorität : **27.03.80 DE 3011935**

(43) Veröffentlichungstag der Anmeldung :
**14.10.81 Patentblatt 81/41**

(45) Bekanntmachung des Hinweises auf die Patenterteilung : **08.02.84 Patentblatt 84/06**

(84) Benannte Vertragsstaaten :
**AT BE CH FR GB IT LI LU NL SE**

(56) Entgegenhaltungen :
**DE-A- 2 615 592**
**DE-A- 2 659 635**
**INTERNATIONAL CONFERENCE ON COMMUNICA-**
**TIONS, 10.-14. Juni 1979, Conference Record, Vol. 1**
**of 4, Seiten 11.3.1 - 11.3.7 Boston, U.S.A. J.C. LUET-**
**CHFORD et al.: "Synchronization of a digital network"**

(73) Patentinhaber : **SIEMENS AKTIENGESELLSCHAFT**
**Berlin und München Wittelsbacherplatz 2**
**D-8000 München 2 (DE)**

(72) Erfinder : **Kammerlander, Karl**
**Wiesenstrasse 10**
**D-8190 Wolfratshausen (DE)**

## Mobiles Funknetz mit netzweiter Synchronisation

Die Erfindung bezieht sich auf ein mobiles Funknetz mit netzweiter Synchronisation, bestehend aus einer Anzahl Funkkonzentratoren in gegenseitiger räumlicher Anordnung nach Art eines Cellularsystems mit sich überlappenden Funkbereichen, bei dem jeweils eine festvorgegebene Anzahl von einander unmittelbar benachbarten Funkbereichen eine Funkbereichsgruppe bilden, in denen sich die insgesamt zur Verfügung stehenden Frequenzkanäle wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind und bei dem wenigstens die Signalisierung in digitaler Form zwischen den ortsfesten Funkkonzentratoren und den beweglichen Teilnehmerstationen über für Duplexbetrieb ausgelegte Organisationskanäle mit Rahmenstruktur vorgenommen ist.

Ein mobiles Funknetz dieser Art ist beispielsweise durch die DE-AS 26 59 635 bekannt. Die Abwicklung der Organisation erfolgt über zentrale Organisationskanäle in dem die verschiedenen Informationen wie Kennung, Anmeldung, Ummeldung, Anwesentheitsprüfung, Belegung und Ruf zeitgestaffelt übertragen werden. Die digitale Form dieser Information gibt ein hohes Maß an Resistenz und ermöglicht darüber hinaus ein direktes Maß für die Verbindungsqualität bzw. den jeweiligen Geräuschabstand über eine Messung des Phasenjitters zu erhalten. Für die Aufrechterhaltung eines ungestörten Betriebes müssen die Teilnehmerstationen neben dem Funkkonzentrator, bei dem sie angemeldet sind, ständig auch benachbarte Funkbereiche überwachen, um sich notfalls bei einem anderen Funkkonzentrator anzumelden, wenn im funkbereichsüberschreitenden Verkehr die Verbindung zum zugeordneten Funkkonzentrator unbrauchbar wird. Um diese Überwachung bei zeitgestaffelten Organisationskanälen mit Rahmenstruktur möglichst zeitsparend, also unter Gewährleistung einer optimalen Systemökonomie durchführen zu können, ist eine netzweise Synchronisation der Funkkonzentratoren der Funkbereiche und damit der benutzten Organisationskanäle erforderlich.

Aus der Veröffentlichung « International Conference on Communications, Juni 79, Vol. 1 of 4, S. 11.3.1-11.3.7 » ist es bekannt, eine Synchronisation nach hierarchischen Strukturen vorzunehmen. Dabei ist eine Hauptreferenzstation in einer zentralen Zone vorgesehen, zu der in einer strahlenförmigen Anordnung Unterstationen angeordnet sind, die mit ihrem « Level » Referenzstationen (effective masters) für weitere, an sie anschließende Unterstationen bilden. Nachteilig ist hierbei die Komplexität der einzelnen Operationen, da eine weitreichende Vermaschung erfolgt.

Eine absolute Frequenzsynchronisation zwischen den Funkkonzentratoren kann dadurch herbeigeführt werden, daß jeder Funkkonzentrator eine Einrichtung zum Empfang des mit einem Zeitzeichen modulierten Trägers eines Normalfrequenzsenders ($\Delta f/f \stackrel{\wedge}{=} 10^{-11}$/Tag), beispielsweise des DCF 77-Normalfrequenzsenders Mainflingen, aufweist, mit dessen Hilfe die zentrale Taktversorgung der Funkkonzentratoren phasenstarr nachgeführt werden kann. Infolge der großen Integrationszeit der Nachführschaltung ist eine solche absolute Frequenzsynchronisation auch unempfindlich gegen kurzzeitige Unterbrechungen des Normalfrequenzsenders. Bei Ausfall des Normalfrequenzsenders über einen größeren Zeitraum muß jedoch mit dem Verlust der netzweiten Synchronisation gerechnet werden, da die quarzstabilisierten Grundtaktgeneratoren der zentralen Taktversorgungen der Funkkonzentratoren bei einer Genauigkeit von $\pm 1 \cdot 10^{-8}$ die Synchronisation im Mittel nur zehn Minuten gewährleisten können. Entsprechendes gilt bei Aufrechterhaltung der Synchronisation mittels in einem Datensatz übertragener Zeitzeichen, wenn diese Übertragung über längere Zeit gestört ist.

Der Erfindung liegt die Aufgabe zugrunde, für ein mobiles Funknetz der einleitend geschilderten Art eine weitere besonders einfach realisierbare Möglichkeit für eine netzweite Synchronisation anzugeben, die weder einen Normalfrequenzsender noch in einem Datennetz ständig übertragene Zeitzeichen benötigt, eine hohe Resistenz gegen mögliche auftretende Störungen aufweist und sich somit auch für eine ersatzweite Synchronisation bei Verwendung einer der vorgenannten Synchronisierarten hervorragend eignet.

Ausgehend von einem mobilen Funknetz mit netzweiter Synchronisation wird diese Aufgabe gemäß der Erfindung dadurch gelöst, daß für die netzweite Synchronisation ein räumlich in der zentralen Zone des Funknetzes angeordneter Funkbereich mit seinem Funkkonzentrator (FUKO) den Hauptbezugs-FUKO abgibt, auf den die FUKOs der ihn umgebenden Funkbereiche sich dadurch nach einer zentrischen Ringstruktur mit einer sich von innen nach außen aufbauenden Hierarchie synchronisieren, daß in Richtung dieser Ringstruktur von außen nach innen jedem FUKO wenigstens einer von den ihm räumlich unmittelbar vorgeordneten FUKOs als Bezugs-FUKO zugeordnet ist.

Der zentrischen Ringstruktur mit einer sich von innen nach außen aufbauenden Hierarchie der gegenseitigen Synchronisation der Funkkonzentratoren liegt die Erkenntnis zugrunde, daß ein solches mobiles Funknetz keine absolute Frequenzsynchronisation benötigt, weil es für eine optimale Abwicklung der Organisationsfunktionen in den mit einer Rahmenstruktur versehenen Organisationskanälen genügt, wenn netzweit eine Synchronisation der Organisationsphasen gewährleistet ist. Diese Organisationsphasen-Synchronisation läßt sich nun in außerordentlich vorteilhafter Weise in der angegebenen Art der gegenseitigen Synchronisation des Funkkonzentratoren innerhalb des Netzes herbeiführen, weil die räumliche Zuordnung dieser Funkkonzentratoren innerhalb des Netzes fest vorgegeben ist und somit die jeweiligen Signallaufzeiten durch die bekannten gegenseitigen Entfernungen der Funkkonzentratoren ebenfalls bekannt sind.

Bei einer bevorzugten Ausführungsform synchronisieren sich die FUKOs gegenseitig über die Organisationskanäle dadurch, daß sie jeweils die Synchronisiersignale ihrer Bezugs-FUKOs empfangen und unter Berücksichtigung der Signallaufzeit auswerten.

Zweckmäßig weist der Hauptbezugs-FUKO entweder ein Frequenznormal höchster Präzision auf oder seine Taktversorgung wird durch Empfang des mit einem Zeitzeichen modulierten Trägers eines Normalfrequenzsenders gesteuert.

Bei einer bevorzugten Ausführungsform des mobilen Funksystems weist jeder FUKO für den Empfang der Synchronisiersignale eines ihm zugeordneten Bezugs-FUKOs in einem Organisationskanal einen Meßempfänger mit einer eigenen Taktversorgung auf, die mittels eines Korrelationsempfängers synchronisiert ist. Hierbei werden die empfangenen Synchronisiersignale auf ihre FUKO-Kennung überprüft. Bei erkanntem Bezugs-FUKO wird dann die zentrale Taktversorgung des betreffenden FUKOs unter Berücksichtigung der durch die Entfernung zum Bezugs-FUKO bekannten Signallaufzeit in der Phase indirekt über eine Frequenzänderung des Normals nachgesteuert.

Die Synchronisierung nach der Erfindung eignet sich auch in vorteilhafter Weise für ein mobiles Funksystem, bei dem den Funkkonzentratoren der Funkbereiche wenigstens ein Organisationskanal gemeinsam zugeordnet ist, der als Mehrfachzugriffkanal mit den Funkkonzentratoren zugeordneten Zeitschlitzen gestaltet ist. In diesem Falle ist die netzweite Synchronisation auch deshalb erforderlich, um die gegenseitige Überschneidungsfreiheit im zeitorganisierten Organisationskanal zu gewährleisten. Die Anforderungen an die Synchronisation der Organisationsphasen können hier dadurch in vernünftigen Grenzen gehalten werden, daß die im Organisationskanal aufeinanderfolgenden Zeitschlitze durch Informationspausen in der Größenordnung einiger Bits voneinander getrennt sind. Bei Verwendung eines Organisationskanals in Form eines Mehrfachzugriffkanals ist es erforderlich, daß der Sender eines FUKOs für die Dauer des Empfangs eines ihm im Sendeband des Organisationskanals von einem Bezugs-FUKO übertragenen Synchronisiersignals gesperrt wird.

Anhand eines in der Zeichnung dargestellten Ausführungsbeispiels soll die Erfindung im folgenden noch näher erläutert werden.

In der Zeichnung bedeuten

Figur 1 ein nach Art eines Cellularsystems gestaltetes Funknetz mit schematischer Darstellung der Zentrischen ringförmigen Synchronisationsstruktur

Figur 2 das Blockschaltbild eines Funkkonzentrators

Figur 3 eine Funkbereichsgruppe

Figur 4 das in Fig. 1 dargestellte Funknetz unter besonderer Angabe der hierin enthaltenen Funkbereichsgruppen

Figur 5 die schematische Darstellung eines bei einem Funknetz nach Fig. 4 verwendeten, als Mehrfachzugriffkanal gestalteten Organisationskanals.

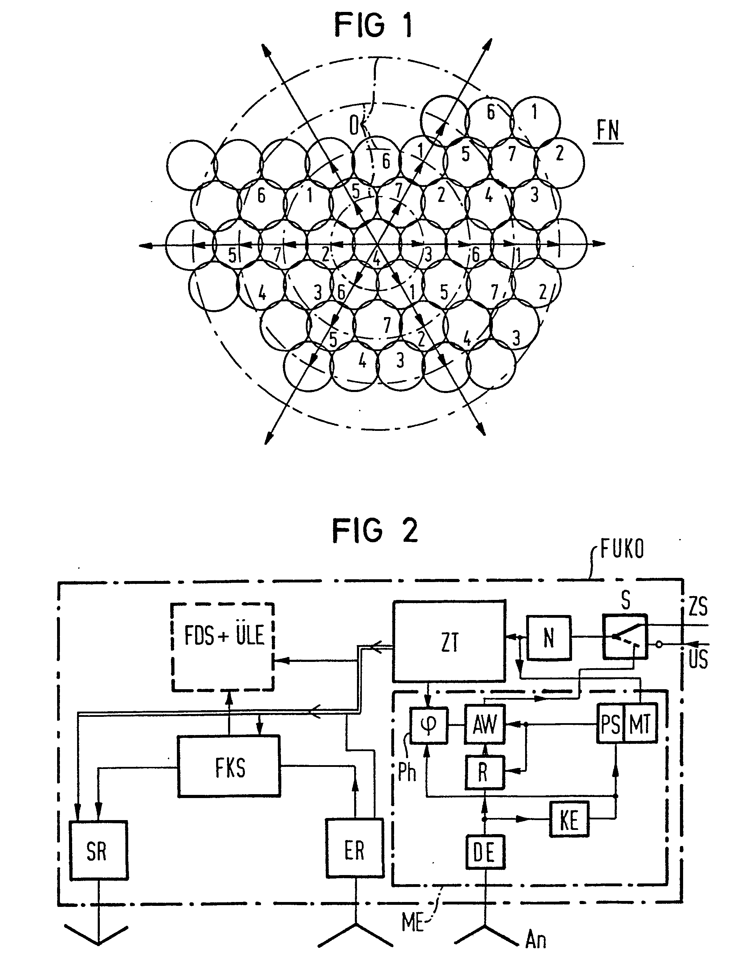

Das in Fig. 1 dargestellte Funknetz FN ist nach Art eines Cellularsystems aufgebaut, bei dem die einzelnen, mit 1, 2, 3, 4, 5, 6 und 7 bezeichneten Funkbereiche sich gegenseitig etwas überlappen. Die den Funkbereichen 1, 2, ..., 7 gegebenen Ordnungszahlen stehen hier für den Frequenzverteilungsplan dieses Funknetzes, bei dem die jeweils die gleiche Ordnungszahl aufweisenden Funkbereiche gleiche Frequenzkanäle verwenden können. Die gegenseitige Synchronisation der jeweils im Zentrum der Funkbereiche 1, 2, ..., 7 angeordneten FUKOs erfolgt nach der in der Zeichnung durch Kreise in unterbrochenen Linien angedeuteten hierarchischen Ringstruktur O, bei der sich die Funkkonzentratoren, ausgehend von dem in der zentralen Zone angeordneten Funkkonzentrator eines Funkbereichs 4 als Hauptbezugs-FUKO, in der angegebenen Pfeilrichtung von innen nach außen dadurch synchronisieren, daß jedem FUKO eines der Funkbereiche 1, 2, ..., 7 wenigstens einer von den ihm räumlich unmittelbar vorgeordneten FUKOs in Richtung des Hauptbezugs-FUKOs als Bezugs-FUKO zugeordnet ist. Wie schon darauf hingewiesen worden ist, kann diese Synchronisation auch als Zweitsynchronisation bei Ausfall eines für die Synchronisation primär vorgesehenen Normalsenders oder eines in einem Datennetz übertragenen Zeitzeichens vorgesehen sein.

Der in Fig. 2 dargestellte FUKO weist neben dem Sender SR und dem Empfänger ER einen zusätzlichen Meßempfänger ME auf, dem in der Regel eine eigene Antenne An zugeordnet ist. Der Sender SR und der Empfänger ER sind mit der Funkkanalsteuerung FKS, die wiederum mit der Funkdatensteuerung FDS und der Überleitstelle ÜLE zusammenarbeitet, verbunden. Der FUKO weist eine zentrale Taktversorgung ZT auf, die als Normal N einen temperaturgeregelten Quarzoszillator enthält. Die Nachsteuerung des Normals N für die zentralen Taktversorgung ZT erfolgt im normalen Betrieb durch das über Datenkanäle zugeführte Zeitsignal ZS. Der Schalter S befindet sich dabei in der angegebenen Stellung. Im Störungsfalle enthält der Schalter S an seinem Steuereingang ein Umschaltsignal US. In der in unterbrochener Linie gezeichneten Schaltstellung wird das Normal N durch das Ausgangssignal des Meßempfängers ME nachgezogen.

Der Meßempfänger ME weist eine eigene Taktversorgung MT mit einem nachgeschalteten steuerbaren Phasenschieber PS auf. Die Taktversorgung MT wird ihrerseits vom Normal N mit dem Grundtakt versorgt. Eingangsseitig hat der Meßempfänger ME einen Demodulator DE, dem ein Korrelationsempfänger KE und ein Regenerator nachgeschaltet sind. Der Korrelationsempfänger wertet ein ankommendes Synchronisiersignal zur Phasennachsteuerung der empfängereigenen Taktversorgung mittels des Phasenschiebers PS aus. Außerdem wird das Ausgangssignal des Korrelationsempfängers KE dem einen Eingang eines Phasenkomparators Ph zugeführt, der es mit einer aus der zentralen Taktversorgung ZT stammenden Zeitmarke vergleicht. Das Ergebnis wird der dem Regenerator R nachgeschalteten Auswerteeinrichtung AW zugeführt. Die Auswerteeinrichtung AW überprüft die Kennung des vom Meßempfänger ME empfangenen Synchronisierzeichens und steuert ausgangsseitig bei erkanntem Bezugs-FUKO, unter Berücksichtigung des Meßergebnisses des Phasenkomparators Ph und der Signallaufzeit des empfangenen Synchronisierzeichens, die Frequenz des Normals nach.

Wie bereits erwähnt worden ist, kann die gegenseitige Synchronisation der Funkkonzentratoren innerhalb des Funknetzes FN in vorteilhafter Weise bei einem Funknetz zur Anwendung kommen, bei dem den Funkkonzentratoren der Funkbereiche wenigstens ein Organisationskanal gemeinsam zugeordnet ist, der als Mehrfachzugriffkanal mit den Funkkonzentratoren zugeordneten Zeitschlitzen gestaltet ist. Ein solcher Organisationskanal hat den großen Vorzug, daß für den Empfang der Synchronisiersignale im Organisationskanal die Meßempfänger sämtlicher FUKOs auf der gleichen Frequenz empfangen können und somit die Möglichkeit gegeben ist, daß einem FUKO zwei und mehr Bezugs-FUKOs wahlweise zugeordnet werden können, ohne daß der Meßempfänger hierzu in seiner Empfangsfrequenz umgestimmt zu werden braucht. Die dadurch erreichte Synchronisierredundanz kommt der Betriebssicherheit zugute.

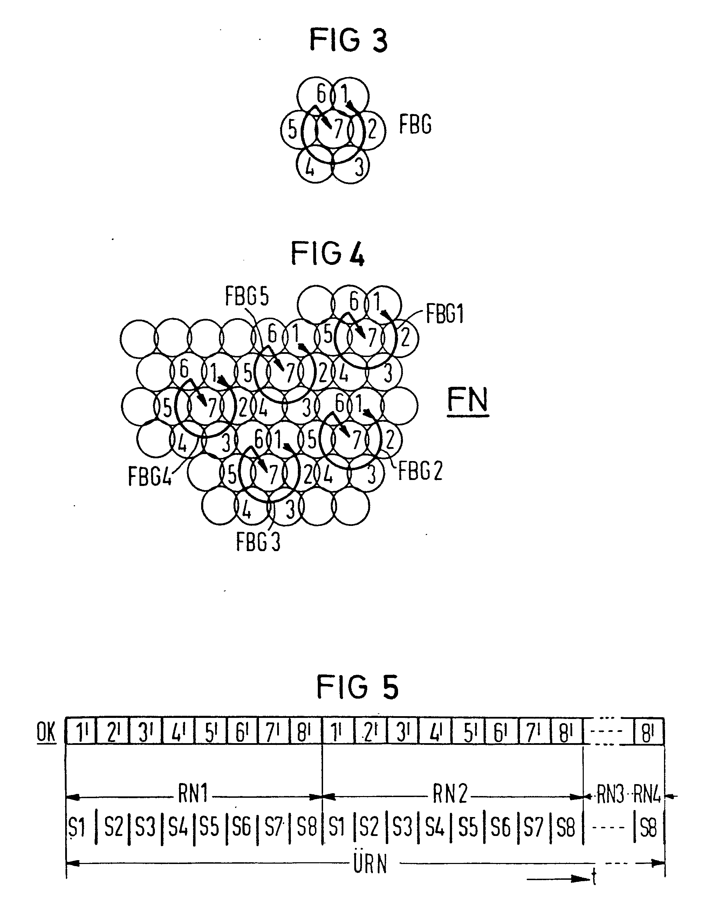

Zum besseren Verständnis dieses Sachverhalts soll im folgenden auf einen solchen bereits vorgeschlagenen Mehrfachzugriff-Organisationskanal anhand der Figuren 3 bis 5 noch näher eingegangen werden. Fig. 3 stellt eine Funkbereichsgruppe FBG mit sieben Funkbereichen 1, 2, ..., 7 dar, wie sie beim Funknetz FN nach Fig. 1 mehrfach zur Anwendung kommt. Diese Mehrfachanwendung ist in Fig. 4 dargestellt, und zwar weist das Funknetz FN, das dem Funknetz FN nach Fig. 1 entspricht, fünf Funkbereichsgruppen FBG1, FBG2, ..., FBG5 auf. Jede Funkbereichsgruppe ist durch einen Ringpfeil hervorgehoben der die im noch zu beschreibenden Organisationskanal nach Fig. 5 angegebene Reihenfolge der Informationsübertragung dieser Funkbereiche andeutet.

Dem Mehrfachzugriff-Organisationskanal nach Fig. 5 liegt die Erkenntnis zugrunde, daß die gleiche Ziffer aufweisenden Funkbereiche 1, 2, ..., 7 der Funkbereiche FBG1, FBG2, ..., FBG5 funktechnisch so gut gegeneinander entkoppelt sind, daß die den allen Funkbereichen gemeinsamen Organisationskanal jeweils gleichzeitig benutzen können.

Der Organisationskanal OK nach Fig. 5 weist einen Überrahmen ÜRN auf, der sich aus vier Rahmen RN1, RN2, RN3 und RN4 mit jeweils acht Zeitschlitzen S1, S2, ..., S8 für die Übertragung von Informationsblöcken 1', 2', ..., 8' der Funkbereiche 1, 2, ..., 7 der Funkbereichsgruppen FBG1, ..., FBG5 zusammensetzt. Die Informationsblöcke 1', 2', ..., 7' sind hierbei entsprechend der Numerierung den Funkbereichen 1, 2, ..., 7 zugeordnet, während der Zeitschlitz S8 einen Informationsblock 8' hat, der entweder einem der Funkbereiche 1, 2, ..., 7 noch zusätzlich zur Verfügung gestellt oder aber für sonstige Signalübertragungen frei gehalten werden kann. Der Organisationskanal OK ist also wie die in Fig. 3 und 4 angegebenen Pfeile verdeutlichen, hinsichtlich seiner Zeitschlitzzuweisung so gestaltet, daß bei der geografischen Numerierung der jeweils sieben Funkbereiche 1, 2, ..., 7 der verschiedenen Funkbereichsgruppen FBG1, ..., FBG5 eine Zeitschlitzrotation besteht, die im gesamten Funknetz FN nach Fig. 4 synchron abläuft. Die zeitliche Überschneidungsfreiheit ist dabei durch die bereits beschriebene gegenseitige Synchronisation der FUKOs gewährleistet.

## Ansprüche

1. Mobiles Funknetz mit netzweiter Synchronisation, bestehend aus einer Anzahl Funkkonzentratoren (FUKOs) in gegenseitiger räumlicher Anordnung nach Art eines Cellularsystems mit sich überlappenden Funkbereichen (1, 2, ..., 7), bei dem jeweils eine fest vorgegebene Anzahl von einander unmittelbar benachbarten Funkbereichen eine Funkbereichsgruppe (FGB) bilden, in denen sich die insgesamt zur Verfügung stehenden Frequenzkanäle wiederholen, bei dem ferner der Frequenzverteilungsplan für die Funkkonzentratoren (FUKOs) so festgelegt ist, daß Gleichkanalstörungen im jeweiligen Funkbereich einschließlich einer erweiterten Randzone weitgehend ausgeschlossen sind und bei dem wenigstens die Signalisierung in digitaler Form zwischen den ortsfesten Funkkonzentratoren (FUKOs) und den beweglichen Teilnehmerstationen über für Duplexbetrieb ausgelegte Organisationskanäle (OK) mit Rahmenstruktur vorgenommen ist, dadurch gekennzeichnet, daß für die netzweite Synchronisation ein räumlich in der zentralen Zone des Funknetzes (FN) angeordneter Funkbereich (4) mit seinem Funkkonzentrator (FUKO) den Hauptbezugs-FUKO abgibt, auf den die FUKOs der ihn umgebenden Funkbereiche (1, 2, ..., 7) sich dadurch nach einer zentrischen Ringstruktur (O) mit einer sich von innen nach außen aufbauenden Hierarchie synchronisieren, daß in Richtung dieser Ringstruktur von außen nach innen jedem FUKO wenigstens einer von den ihm räumlich unmittelbar vorgeordneten FUKOs als Bezugs-FUKO zugeordnet ist.

2. Mobiles Funknetz nach Anspruch 1, dadurch gekennzeichnet, daß sich die FUKOs gegenseitig über Organisationskanäle dadurch synchronisieren, daß sie jeweils die Synchronisiersignale der Bezugs-FUKOs empfangen und unter Berücksichtigung der Signallaufzeit auswerten.

3. Mobiles Funknetz nach Anspruch 1 oder 2, dadurch gekennzeichnet, daß der Hauptbezugs-FUKO entweder ein Frequenznormal höchster Präzision aufweist oder aber seine Taktversorgung durch Empfang des mit einem Zeitzeichen modulierten Trägers eines Normalfrequenzsenders gesteuert ist.

4. Mobiles Funknetz nach einem der vorhergehenden Ansprüche, dadurch gekennzeichnet, daß jeder FUKO für den Empfang der Synchronisiersignale eines ihm zugeordneten Bezugs-FUKOs in einem Organisationskanal einen Meßempfänger (ME) mit einer eigenen Taktversorgung (MT/PS) aufweist, die mittels eines Korrelationsempfängers (KE) synchronisiert ist, daß ferner die empfangenen Synchronisiersignale auf ihre FUKO-Kennung überprüft sind und daß bei erkanntem Bezugs-FUKO die zentrale Taktversorgung (ZT) des betreffenden FUKOs, unter Berücksichtigung der durch die Entfernung zum Bezugs-FUKO bekannten Signallaufzeit, in der Phase indirekt über eine Frequenzänderung des Normals (N) nachgesteuert ist.

5. Mobiles Funknetz nach einem der Ansprüche 1 bis 4, bei dem den Funkkonzentratoren (FUKOs) der Funkbereiche (1, 2, ..., 7) wenigstens ein Organisationskanal (OK) gemeinsam zugeordnet ist, der als Mehrfachzugriffkanal mit den Funkkonzentratoren (FUKOs) zugeordneten Zeitschlitzen gestaltet ist, dadurch gekennzeichnet, daß der Sender (SR) eines FUKOs für die Dauer des Empfangs eines ihm im Sendeband des Organisationskanals (OK) von einem Bezugs-FUKO übertragenen Synchronisiersignals gesperrt ist.

**Claims**

1. A mobile radio network with overall network synchronisation, consisting of a number of radio concentrators (FUKOs) are arranged side by side in the manner of a cellular system with overlapping radio ranges (1, 2, ..., 7), wherein a firmly determined number of radio ranges directly adjacent one another form a radio range group (FGB), all the frequency channels available being repeated in each group, and wherein furthermore the frequency distribution plan for the radio concentrators (FUKOs) is so determined that common channel interference in the particular radio range including an extended edge zone is largely excluded, and wherein at least the signalling is carried out in digital form between the stationary radio concentrators (FUKOs) and the mobile subscriber stations by means of organisation channels (OK) which are designed for duplex operation and have a frame structure, characterised in that overall network synchronisation a radio range (4) spatially in the central zone of the radio network (FN) emits the main reference FUKO by means of its radio concentrator (FUKO), to which main reference FUKO the FUKOs of the radio ranges (1, 2, ..., 7), which surround said main reference FUKO, are synchronised in accordance with a concentric ring structure (O) having a hierarchy which is established from the inside towards the outside, in that in the direction of this ring structure, from the inside towards the outside, each FUKO is assigned at least one of the FUKOs, which are spatially directly pre-arranged relative to the former, as a reference FUKO.

2. A mobile radio network as claimed in Claim 1, characterised in that the FUKOs synchronise one another by means of organisation channels in that they respectively receive the synchronising signals of the reference FUKOs and analyse them with regard to the signal transit time.

3. A mobile radio network as claimed in Claim 1 or 2, characterised in that the main reference FUKO either possesses a frequency standard of high precision or its pulse supply is controlled by receiving the carrier of a standard frequency transmitter, which carrier is modulated with a time character.

4. A mobile radio network as claimed in one of the preceding claims, characterised in that in an organisation channel, each FUKO possesses a measuring receiver (ME), which has a separate pulse supply (MT/PS) and which is synchronised by means of a correlation receiver (KE) for the receipt of the synchronising signals of a reference FUKO assigned to said FUKO, and that furthermore the received synchronising signals are checked in respect of their FUKO-characteristic, and that when a reference FUKO has been recognised, the central pulse supply (ZT) of the particular FUKO is indirectly re-controlled in respect of phase by means of a change in frequency of the standard (N) with regard to the signal transit time which is known as a result of the distance to the reference FUKO.

5. A mobile radio network as claimed in one of Claims 1 to 4, wherein the radio concentrators (FUKOs) of the radio ranges (1, 2, ..., 7) are commonly assigned at least one organisation channel (OK) which is designed as a multiple access channel having time slots which are allocated to the radio concentrators (FUKOs), characterised in that the transmitter (SR) of a FUKO is blocked during the period of receiving a synchronising signal which is transmitted by a reference FUKO in the transmitting band of the organisation channel (OK).

**Revendications**

1. Réseau de stations radio mobile avec une synchronisation sur l'ensemble du réseau, constitué par un certain nombre de concentrateurs hertziens (FUKO) dans une disposition spatiale réciproque à la manière d'un système cellulaire comportant des régions de radiocommunications (1, 2, ..., 7) à chevauchement, et dans lequel respectivement un nombre prédéterminé de façon fixe de régions de radiocommunications, qui sont directement voisines les unes des autres et dans lesquelles les canaux de fréquence globalement disponibles se répètent, forment un groupe (FGB) de régions de radiocommunications et dans lequel en outre le plan de répartition des fréquences pour les concentrateurs hertziens (FUKO) et est fixé de telle manière que des interférences par canal commun dans la région respective de radiocommunications ainsi que dans une zone marginale étendue sont exclus dans une large mesure et dans lequel au moins la signalisation sous forme numérique entre les concentrateurs hertziens fixes (FUKO) et les postes d'abonné mobiles est réalisée au moyen de canaux d'organisation (OK) conçus pour le fonctionnement en duplex et comportant une structure de trame, caractérisé par le fait que pour la synchronisation étendue à l'ensemble du réseau, une région de radiocommunications (4) disposée spatialement dans la zone centrale du réseau de stations radio (FN), fournit avec son concentrateur hertzien (FUKO) le concentrateur hertzien de référence principal sur lequel les concentrateurs hertziens des régions de radiocommunications (1, 2, ..., 7), entourant ledit concentrateur se synchronisent conformément à une structure en anneau centrée (O) avec une hiérarchie s'établissant de l'intérieur vers l'extérieur, grâce au fait que de l'extérieur vers l'intérieur suivant la direction de cette structure en anneau, à chaque concentrateur hertzien est associé, en tant que concentrateur hertzien de référence, au moins l'un des concentrateurs hertziens disposés spatialement directement en amont dudit concentrateur.

2. Réseau de stations de radio mobile suivant la revendication 1, caractérisé par le fait que les concentrateurs hertziens se synchronisent réciproquement par l'intermédiaire de canaux d'organisation grâce au fait qu'ils reçoivent les signaux de synchronisation des concentrateurs hertziens de référence et les évaluent en tenant compte du temps de propagation des signaux.

3. Réseau de stations de radio mobile suivant la revendication 1 ou 2, caractérisé par le fait que le concentrateur hertzien de référence principal possède un étalon de fréquence présentant une précision extrêmement élevée ou bien que son dispositif de délivrance de cadence est commandé par la réception de la porteuse, modulée par un signal horaire, d'un émetteur de fréquence étalon.

4. Réseau de stations de radio mobile suivant l'une des revendications précédentes, caractérisé par le fait que chaque concentrateur hertzien possède, pour la réception des signaux de synchronisation d'un récepteur hertzien de référence, qui lui est associé, dans un canal d'organisation, un récepteur de mesure (ME) comportant son propre dispositif de délivrance de cadence (MT/PS), qui est synchronisé au moyen d'un récepteur de corrélation (KE), qu'en outre les signaux de synchronisation reçus sont contrôlés du point de vue de leur indicatif d'un concentrateur hertzien, et que, dans le cas où un concentrateur hertzien de référence est identifié, la phase du dispositif central (ZT) de délivrance de cadence du concentrateur hertzien considéré est asservie de façon indirecte par l'intermédiaire d'une modification de la fréquence de l'étalon (N), en tenant compte du temps de propagation des signaux connu à partir de la distance par rapport au concentrateur hertzien de référence.

5. Réseau de stations radio mobile suivant l'une des revendications 1 à 4, dans lequel aux concentrateurs hertziens (FUKO) des régions de radiocommunications (1, 2, ..., 7) est associé en commun au moins un canal d'organisation (OK) qui est réalisé sous la forme d'un canal à accès multiples avec des créneaux temporels associés aux concentrateurs hertziens (FUKO), caractérisé par le fait que l'émetteur (SR) d'un concentrateur hertzien est bloqué pendant la durée de la réception d'un signal de synchronisation qui lui est transmis dans la bande d'émission du canal d'organisation (OK) par un concentrateur hertzien de référence.

# FIG 1

FN

# FIG 2

# FIG 3

# FIG 4

# FIG 5